# EUROPEAN PATENT APPLICATION

(11) **EP 2 840 511 A1**
(43) Date of publication of application: **25.02.2015**
(21) Application number: 12874829.0
(22) Date of filing: 19.04.2012
(51) Int. Cl.: G06F 17/00, G06F 17/21, G06F 17/24, G06F 3/14

(54) **SYSTEM AND METHOD FOR DYNAMICALLY CONVERTING WEBPAGE, AND COMPUTER-READABLE RECORDING MEDIUM**

(30) Priority: 16.04.2012 KR 20120039245
(71) Applicant: Kwon, Oh Suk, Seoul 137-841 (KR)
(72) Inventor: Kwon, Oh Suk, Seoul 137-841 (KR)
(74) Representative: Beetz & Partner mbB
(86) International application number: PCT/KR2012/003011
(87) International publication number: WO 2013/157678

(57) **Abstract**

The present invention relates to a system for dynamically converting a webpage, which can construct a web application and a site for supporting a cross browser and a cross platform and, particularly, the system for dynamically converting a webpage comprises: a library storage unit for storing at least one constituent element which constitutes a webpage or a web application; a layout editing unit for arranging the constituent element selected from the library storage unit on a layout for configuring the webpage; an attribute editing unit for setting an attribute for each constituent element arranged by the layout editing unit; a contents editing unit for providing a function of editing contents arranged by the layout editing unit; a parameter converting unit for converting each constituent element arranged by the layout editing unit into a standard parameter value; a standard parameter information database for storing the standard parameter value converted by the parameter converting unit; a browser determination unit for determining the type of a browser or the type of an operating system of a user terminal according to a conversion request of a user; a conversion engine unit for converting standard parameter information stored in the standard parameter information database into a suitable type of a webpage source according to the determination of the browser determination unit; and a display engine unit for displaying the converted source.

## Description

### [TECHNICAL FIELD]

The present invention relates to a dynamic conversion system of a webpage, and more specifically, to a dynamic conversion system of a webpage for building up a website and a web application supporting a cross browser and a cross platform, a method, and a computer-readable recording medium.

### [DISCUSSION OF RELATED ART]

Generally, the Internet is an open-type network configured to allow anyone from all around the world to freely access the computer of his opposite party via a common protocol called TCP/IP and may be used for transfer of not only basic text information, but as the compression techniques advance, multimedia information as well. As such, the Internet may allow for use of various services such as electronic mailing, file transfer, and WWW (World Wide Web).

As such, the use of the Internet is significantly increased nationwide or worldwide, and the Internet is becoming more critical as a strategic tool for enhancing productivity and efficiency over the existing industrial areas. New business opportunities using the Internet are being steadily available, and are in the trend of expanding their areas. Accordingly, more and more persons are jumping into the Internet business.

Meanwhile, as recently released smartphones provide enhanced performance and capabilities, many of users are switching their phones from features phones to smartphones. The "smartphone" is a mobile phone equipped with computer-supported functions, and may offer a video playback function, Internet browsing, the functions of PDAs (Portable Digital Assistants), as well as the functions of the feature phone. The smartphone has various input methods and a touchscreen to provide an interface for easier use. Further, the smartphone may access the Internet and computer to serve as a terminal that may conduct emailing, web browsing, faxing, e-banking, or gaming, in the aid of wireless Internet functions. As such, as various functions may be realized through the smartphones, a diversity of dedicated application programs and content that are run on the smartphones are being developed.

Further, the recent wide-spreading Internet triggered a sharp growth of wireless mobile communication technologies as well as wired communication techniques, and information search is possible in real-life through mobile phones, PDAs, hand-held computers or other mobile terminals without any limitation in time and place.

However, the wireless Internet is difficult to use like the existing wired Internet due to limitations in the wireless network resources and limitations in view of the hardware of mobile terminals such as small screen size or limited input devices, and accordingly, domestic or foreign web service providers have established the wireless Internet systems separately from the existing wired Internet systems to provide services.

However, the conventional mobile web service schemes are very insufficient due to duplication of resources, and provision of both wireless and wired services for information search and utilization requires establishment of wireless and wired websites, respectively. Accordingly, various mobile web service schemes have been proposed to allow for simple reuse on wireless web of a vast amount of existing wired web content resources or various service models serviced over the mobile Internet.

Meanwhile, depending on the type of mobile terminals, various types of browsers and operation systems (OSs) have been separately developed. Thus, the differences between such browsers or between the OSs rendered applications to be developed to comply with the respective browsers and OSs. For example, various browsers such as Microsoft (MS) Internet Explorer (IE), Opera, Chrome, Safari, etc., fail to perfectly support the standards, and the applications do not operate in the same fashion according to the OSs including Google's Android and Apple's IOS. Accordingly, separate applications are forced to be developed to fit for their respective browsers and OSs.

Meanwhile, as a technique regarding a method for converting the format of a webpage into a different format, Korean Patent Application Publication No. 2003-0057285, titled "Device and method for converting HTML data of webpage to format appropriate to be represented on mobile station (SAMSUNG electronics corporation)" (Document 1), discloses a method for converting HTML data to a new format appropriate for the display of a mobile station depending on the performance and limitation of the mobile station. To this end, Document 1 offers an HTML filtering process for optimizing the HTML data to the display used for the mobile station.

Such method, however, translates an original webpage in a limited fashion depending on the performance of the mobile station, and thus, the resultant information may differ from the original webpage information. Further, when the browser of the mobile station does not support the HTML format, the original webpage cannot be browsed.

Accordingly, a need exists for developing a web application converting engine that may operate in the same manner on various browsers.

Further, as set forth above, as the smartphones gain popular, separate mobile websites, in addition to the existing PC-based websites, need to be developed, and this adds a significant burden to service providers in view of time, costs, and efficiency. Such burden comes from the fact that the conventional methods for developing websites, mobile sites, or web applications are insufficient.

For example, in the conventional website development and maintenance methods, a designed document is program-coded and uploaded on a web server, and its result is verified. As such, the conventional methods go through the above-described processes upon design renewal or expanding functions and thus consume a lot of time and costs. Further, it is nearly impossible for amateurs to develop or operate their own websites or web applications.

### [SUMMARY]

### [OBJECTS]

An object of the present invention is to provide a dynamic conversion system, method, and computer-readable recording medium, which allows for an interconversion in format between webpages through a webpage conversion engine to be able to provide an application that operates in the same manner in the environment of various browsers and OSs.

Further, another object of the present invention is to provide a dynamic conversion system, method, and computer-readable recording medium, which provides a cross browser or cross platform by allowing for an interconversion between a flash-based application and an HTML5-based application by a web application conversion engine that may operate based on Javascript supporting the cross browser and a standard language, HTML5.

Further, still another object of the present invention is to provide a dynamic conversion system, method, and computer-readable recording medium, which forms real-time generated flash or HTML5-based website and content as parameters, stores the parameters in a database, and in response to a user's request, generates and provides in real-time a website and web application consistent with each format through a conversion engine.

Further, yet still another object of the present invention is to provide a dynamic conversion system, method, and computer-readable recording medium, which provides functions that allow amateurs to easily build up a low-cost, high-efficiency site (i.e., a website, mobile site, content, etc.) by supporting a layout editing unit, a display engine, an attribute editing unit, and a conversion unit (from flash to HTML5 or from HTML5 to flash) in producing a webpage.

The above objects and other various advantages will be apparent to those skilled in the art from the preferred embodiments of the present invention.

### [CONFIGURATIONS]

To achieve the above-described objects of the present invention and the unique effects of the present invention to be described, the features of the present invention are as follows:

According to an aspect of the present invention, a dynamic conversion system of a webpage comprises a library storage unit storing at least one constituent elements constituting a webpage or a web application; a layout editing unit arranging the constituent elements selected from the library storage unit on a layout to constitute a webpage; an attribute editing unit configuring an attribute of each constituent element arranged by the layout editing unit; a contents editing unit providing a function of editing content arranged by the layout editing unit; a parameter converting unit converting each constituent element arranged by the layout editing unit into a standard parameter value; a standard parameter information database storing the standard parameter value converted by the parameter converting unit; a browser determination unit determining the type of a browser or an OS of a user terminal in response to a conversion request from a user; a conversion engine unit converting standard parameter information stored in the standard parameter information database into a proper type of webpage source depending on a determination of the browser determination unit; and a display engine unit displaying the converted source.

Preferably, the constituent elements constituting the webpage or web application include any one or more selected from an image, a video, text, and a sound.

Preferably, an attribute editable by the attribute editing unit includes any one or more selected from horizontal, vertical, transparence, background, rotation, picture, title, and skin.

Preferably, the conversion engine unit conducts conversion from the standard parameter information to a webpage of an HTML5 standard format or flash format.

Preferably, the dynamic conversion system of a webpage further comprises a mobile editing unit re-editing the webpage produced by the layout editing unit to fit for an attribute of a mobile webpage.

According to another aspect of the present invention, a dynamic conversion method of a webpage performed on a webpage dynamic conversion system comprises the steps of: storing at least one constituent elements constituting a webpage or a web application by a library storage unit; arranging the constituent element selected from the library storage unit on a layout to constitute a webpage by a layout editing unit; configuring an attribute of each constituent element arranged by the layout editing unit by an attribute editing unit; providing a function of editing content arranged by the layout editing unit by a contents editing unit; converting each constituent element arranged by the layout editing unit into a standard parameter value by a parameter converting unit; storing the standard parameter value converted by the parameter converting unit by a standard parameter information database; determining the type of a browser or an OS of a user terminal in response to a conversion request from a user by a browser determination unit; converting standard parameter information stored in the standard parameter information database into a proper type of webpage source depending on a determination of the browser determination unit by a conversion engine unit; and displaying the converted source by a display engine unit.

Preferably, the constituent elements constituting the webpage or web application include any one or more selected from an image, a video, text, and a sound.

Preferably, an attribute editable by the attribute editing unit includes any one or more selected from horizontal, vertical, transparence, background, rotation, picture, title, and skin.

Preferably, the step of converting into the parameter source includes conducting conversion from the standard parameter information to a webpage of an HTML5 standard format or flash format.

Preferably, the dynamic conversion method of a webpage further comprises re-editing the webpage produced by the layout editing unit to fit for an attribute of a mobile webpage by a mobile editing unit.

Meanwhile, the information for receiving the dynamic conversion method of a webpage may be stored in a recording medium that may be read by a server computer. Such recording medium includes all types of recording media storing a program and data to be readable by a computer system. Examples of the recording media include a ROM (Read Only Memory), a RAM (Random Access Memory), a CD (Compact Disk), a DVD (Digital Video Disk)-ROM, a magnetic tape, a floppy disc, an optical data storage device, and a device implemented in the carrier-wave form (for example, transmission through the Internet). Further, such recording media may be distributed in a computer system connected via a network to store and execute computer-readable codes in a distributed fashion.

### [EFFECTS]

As described above, according to the present invention, an interconversion in format between webpages may be made through a webpage conversion engine to be able to provide an application that operates in the same manner in the environment of various browsers and OSs.

Further, according to the present invention, an interconversion between a flash-based application and an HTML5-based application may be made by a web application conversion engine that may operate based on Javascript supporting the cross browser and HTML5.

Further, according to the present invention, real-time generated flash or HTML5-based website and content may be formed as parameters that are stored in a database, and in response to a user's request, a website and web application consistent with each format through a conversion engine may be generated and provided in real-time.

Further, a webpage is resized using four or eight handlers in designating its region. In the mobile environment (e.g., a smartphone or tablet PC), however, a reduction in size of the handlers causes inconvenience. Accordingly, according to the present invention, a predetermined region of an object, such as an upper, lower, left, or right region of the object, is designated as a handler to allow resizing to be easily conducted in the mobile environment.

Further, the image editors in the conventional image editing programs (e.g., Photoshop, etc.), when converting an original rectangular image into an elliptical image, generate a separate converted image, and thus, the image is recorded in the storage space as much as the conversion effect applies. This causes a waste of the storage space. However, according to the present invention, the conversion effect is converted into standard parameters that are then stored in the database, and when there is a request from the user, the parameters are converted to fit for flash or HTML5 and are displayed. Thus, a number of conversion effects may be created using a single original version, and the storage space may be saved.

Further, it is not easy to edit an original image using the functions of the typical image editing programs, including changing sizes, extensions, image qualities, and rotating. However, application of the image parameter conversion according to the present invention allows amateurs to make easy changes to the shape of images.

### [BRIEF DESCRIPTION OF DRAWINGS]

Fig. 1 is a view illustrating the concept of converting a flash file into a HTML5 web document according to an embodiment of the present invention.
Fig. 2 is a view illustrating the concept of converting an HTML5 application into a flash page according to an embodiment of the present invention.
Fig. 3 is a block diagram illustrating the structure of a dynamic conversion system of a webpage according to an embodiment of the present invention.
Fig. 4 is a view illustrating the concept of a webpage conversion structure according to an embodiment of the present invention.
Fig. 5 is a view illustrating a processing configuration of a layout editing unit of a dynamic conversion system according to an embodiment of the present invention.
Fig. 6 is a view illustrating a processing configuration of a contents editing unit of a dynamic conversion system according to an embodiment of the present invention.
Fig. 7 is a view illustrating an existing attribute editing method.
Fig. 8 is a view illustrating a processing configuration of an attribute editing unit of a dynamic conversion system according to an embodiment of the present invention.
Fig. 9 is a flowchart illustrating a webpage conversion process according to an embodiment of the present invention.
Fig. 10 is a flowchart illustrating a process of conversion to a mobile webpage according to an embodiment of the present invention.
Fig. 11 is a view illustrating the concept of converting a flash or HTML-format webpage into a mobile page according to an embodiment of the present invention.
Fig. 12 is a view illustrating the concept of converting a flash or HTML-format webpage into a HTML5 or flash-format page according to an embodiment of the present invention.
Fig. 13 is a view illustrating a region designation shift of a general resizing processor.
Fig. 14 is a view illustrating a method of designating a region according to an embodiment of the present invention.
Fig. 15 is a view illustrating the concept of general image conversion.
Fig. 16 is a view illustrating the concept of image conversion according to an embodiment of the present invention.
Fig. 17 is a view illustrating an image parameter conversion method according to an embodiment of the present invention.

### [DETAILED DESCRIPTION OF EMBODIMENTS]

The following detailed description refers to the accompanying drawings that illustrate particular embodiments of the present invention. Such embodiments are described in detail in such an extent that the present invention may be practiced by those of ordinary skill in the art. Although different embodiments from each other are described, it should be appreciated that the embodiments do not exclude each other. For example, the specific shapes, structures, and features disclosed herein may be implemented in other embodiments without departing from the spirit and scope of the present invention in connection with an embodiment. Further, it should be appreciated that the position or arrangement of individual components in each embodiment may be varied without departing from the spirit and scope of the present invention. Accordingly, the following detailed description does not intend to limit the scope of the present invention, and rather, the scope of the present invention is limited only by the appended claims together with the equivalents thereof. The similar reference numerals refer to the same or similar functions in various aspects.

The present invention discloses a dynamic conversion system for building up a website and a web application supporting a cross browser and a cross platform and a method for operating the same. In particular, the present invention provides a conversion engine that may build up a web application to be able to operate based on Javascript (jQuery, Prototype) supporting a cross browser and a standard language, HTML5, in order to eliminate inconvenience of development of separate applications that fit for various browsers and OSs. Accordingly, a flash-based application and an HTML5-based application may be interconverted into each other by the conversion engine to implement a cross browser and a cross platform.

Meanwhile, there is a conventional tool to convert a flash file into an HTML5 format file. However, such conversion tool merely converts a static "swf" format file into an HTML5 format, and cannot conduct a conversion on a website and content generated by the user in real-time. However, according to the present invention, a flash or HTML5-based website and content generated in real-time are formed as parameters and the parameters are stored in a database. Then, in response to the user's request, the conversion engine according to the present invention is used to generate in real-time a website and web application in the format of "HTML5+Javascript (jQuery, Prototype)" and display it on a browser.

Further, in producing a webpage according to an embodiment of the present invention, a layout editing unit, a display engine, an attribute editing unit, and a conversion unit (from flash to HTML5 or from HTML5 to function) are supported to provide functions that allow amateurs to easily build up a low-cost, high-efficiency site (i.e., a website, a mobile site, content, etc.).

The layout editing unit modularizes a website using a builder, and the attribute editing unit allows for edition of a website and a web application by personalizing an editor. Further, the display engine implements a dynamic screen by various editing effects, and the conversion unit automatically converts an HTML5 file into a flash file.

Hereinafter, preferred embodiments of the present invention are described in detail with reference to the accompanying drawings so that the present invention may be easily practiced by those of ordinary skill in the art.

### Concept system of dynamic conversion of webpage

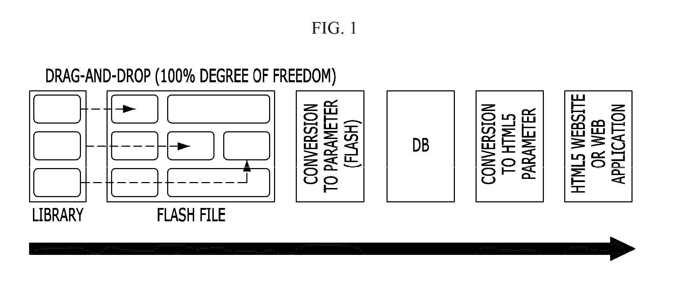

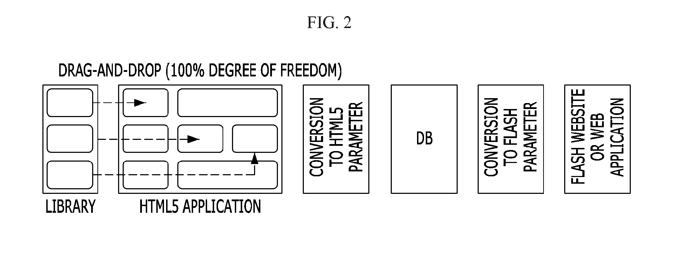

Fig. 1 illustrates the concept of converting a flash file into an HTML5 web document, and Fig. 2 illustrates the concept of converting an HTML5 document into a flash file.

Fig. 1 is a view illustrating the concept of converting a flash file into an HTML5 web document according to an embodiment of the present invention. Referring to Fig. 1, the constituent elements (for example, images, videos, text, sounds, etc.) constituting a webpage stored in a library are arranged by drag-and-drop using a mouse to generate a flash file. In this case, the flash file is converted into parameters that are then stored in a database according to an embodiment of the present invention.

The information stored in the database as a result of conversion to the parameters may be information on the position and attribute of each of the constituent elements constituting the flash file and file information (e.g., a file name on the library) of a corresponding constituent element. As such, the parameter-converted flash information stored in the database is converted into HTML5 parameters in response to a user's request. Then, an HTML5 website or web application is generated.

Fig. 2 is a view illustrating the concept of converting an HTML5 application into a flash page according to an embodiment of the present invention. Referring to Fig. 2, the constituent elements (e.g., images, videos, text, sounds, etc.) constituting a webpage stored in a library are arranged by drag-and-drop using a mouse to generate an HTML5 application. In this case, the HTML5 application file is converted into HTML5 parameters and stored in a database according to an embodiment of the present invention.

The information stored in the database as a result of the conversion into the parameters may be information the position and attribute of each of the constituent elements constituting the HTML5-format file and file information (e.g., a file name on the library) of a corresponding constituent element. As such, the parameter-converted HTML5 information stored in the database may be converted into flash parameters in response to a user's request. Then, a flash website or a web application is generated.

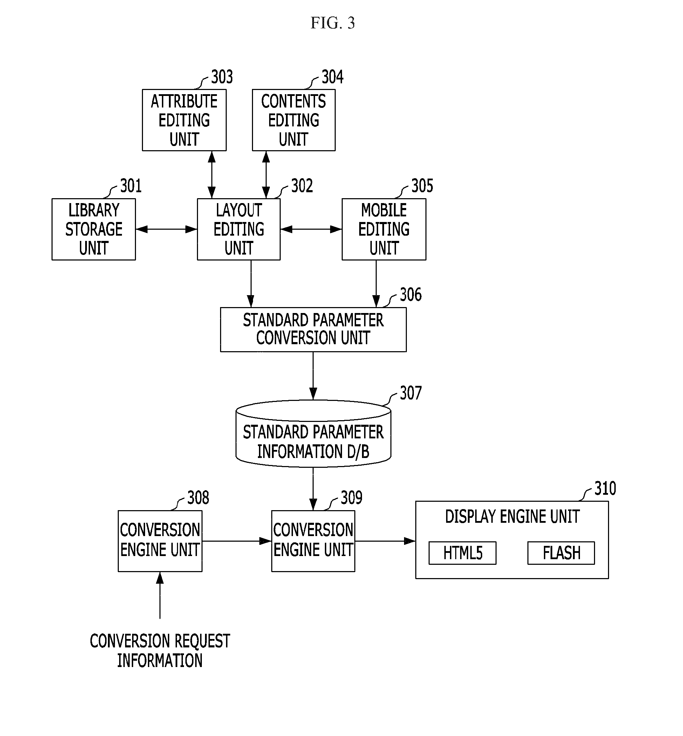

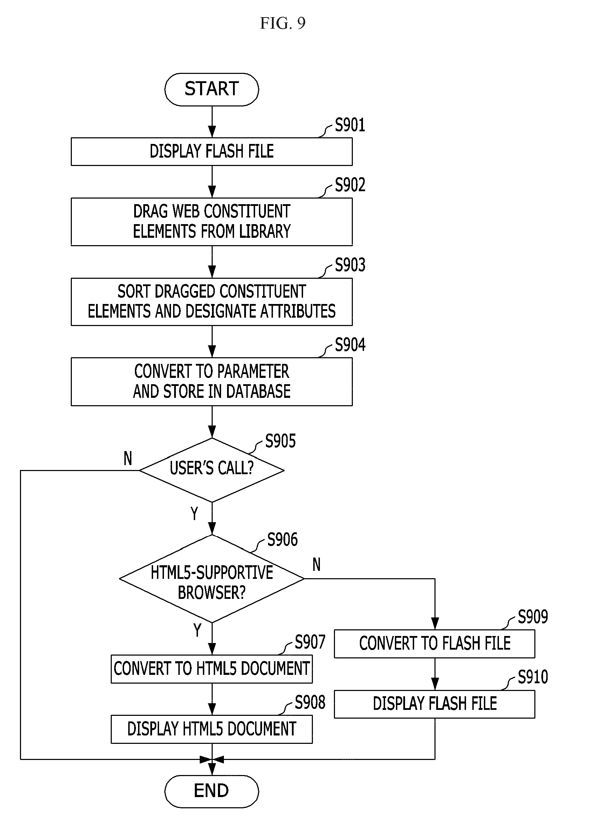

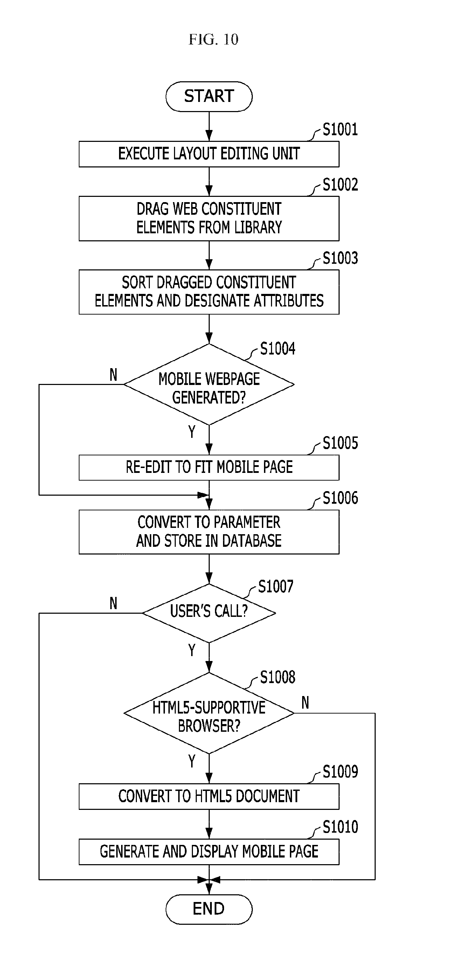

Hereinafter, the structure of a system and device according to an embodiment of the present invention is described with reference to Figs. 3 to 8, and a service process according to an embodiment of the present invention is described with reference to Figs. 9 and 10.

### Dynamic conversion system of webpage

Fig. 3 is a block diagram illustrating the structure of a dynamic conversion system of a webpage according to an embodiment of the present invention. Referring to Fig. 3, the dynamic conversion system according to an embodiment of the present invention may include a library storage unit 301, a layout editing unit 302, an attribute editing unit 303, a contents editing unit 304, a mobile editing unit 305, a standard parameter converting unit 306, a standard parameter information database 307, a browser determination unit 308, a conversion engine unit 309, and a display engine unit 310.

First, the library storage unit 301 stores each library as the constituent elements constituting a webpage or a web application, and the library may be, e.g., an image, a video, text, or a sound.

The layout editing unit 302 provides a function of editing the webpage by dragging-and-dropping each library stored in the library storage unit 301 using a mouse. In this case, the attribute of each constituent element arranged by the layout editing unit 302 may be configured by the attribute editing unit 303. Further, the contents editing unit 304 may provide a function of re-editing the content arranged by the layout editing unit 302. The re-editing may be, e.g., size changing, color changing, rotation, or transparence setting.

As such, if editing the webpage is complete by the layout editing unit 302, it is converted into standard parameters by the standard parameter converting unit 306, and the converted parameters are stored in the standard parameter information database 307. Meanwhile, in case the webpage produced from the layout editing unit 302 is a mobile webpage, it is re-edited by the mobile editing unit 305 to be consistent with the attribute of the mobile webpage.

As such, if a user's request for conversion is received after the edited webpage is stored as standard parameters, the browser determination unit 308 determines the type of a browser or the type of an OS corresponding to the user's conversion request. Accordingly, the conversion engine unit 309 converts conducts conversion from the standard parameter information stored in the standard parameter information database 307 to a proper type of webpage according to the determination of the browser determination unit 308.

As described above, the source information converted to fit for the corresponding type is displayed by the display engine unit 310 in the HTML5 format or flash format to be consistent with the user browser and execution environment.

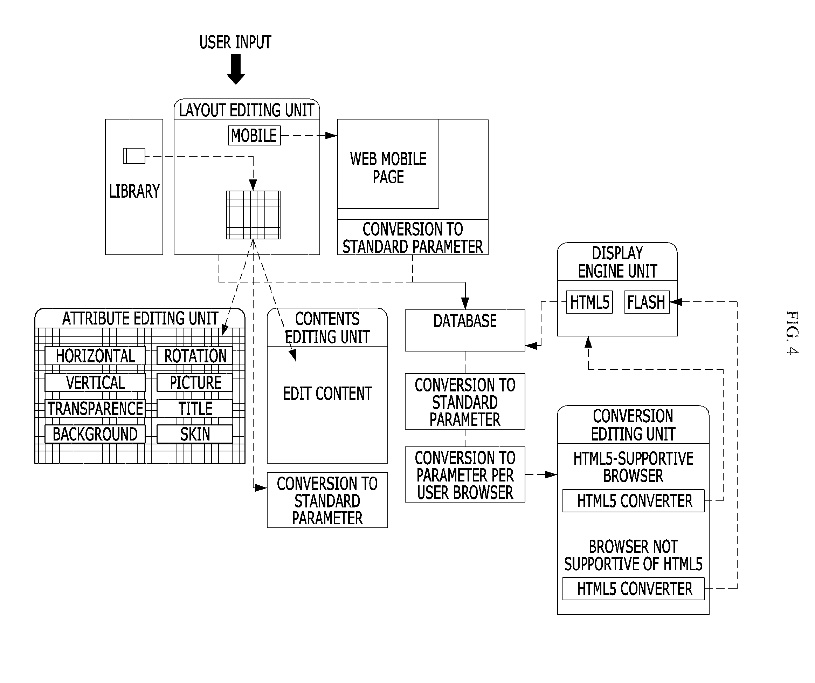

Fig. 4 is a view illustrating the concept of a webpage conversion structure according to an embodiment of the present invention. Referring to Fig. 4, as described above, the user arranges each constituent element of the library to a desired position through drag-and-drop by the layout editing unit. In this case, in case a mobile webpage intends to be generated, they are rearranged and configured by the mobile editing unit to be consistent with the mobile page standards.

Meanwhile, while the editing process is conducted through the layout editing unit, the attribute of each constituent element may be edited through the attribute editing unit, and each content may be edited through the contents editing unit. The attributes editable by the attribute editing unit may include horizontal, vertical, transparent, background, rotation, picture, title, ski, etc. This will be described below in greater detail.

As such, if a desired webpage is configured by the layout editing unit or the mobile editing unit, it is converted into standard parameters and stored in a database according to an embodiment of the present invention.

In this case, in case there is the user's request for browsing the webpage, the user's web browser is first examined, and information such as the user's ID, page key value, and browser is collected.

As described above, the conversion engine unit refers to the collected information to convert the standard parameters to be consistent with the user browser. For example, in case the user browser is a browser supporting HTML5 format, the stored standard parameters are converted into an HTML5-format webpage through an HTML5 converter. In contrast, in case the user browser is a browser that is not supportive of HTML5 format, the stored standard parameters are converted into a flash-format webpage through a flash converter. Last, the webpage converted and generated through the conversion engine unit is browsed through the display engine unit, and the browsed information may be stored in the database.

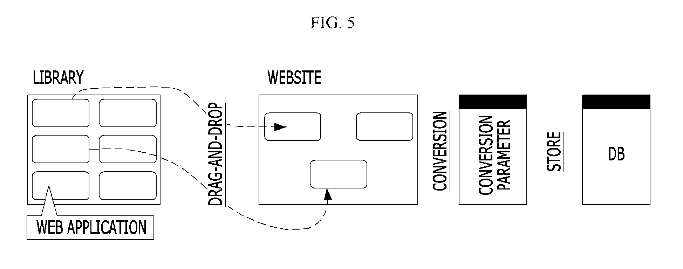

Hereinafter, referring to Figs. 5 to 8, the functional units described above in connection with Figs. 3 and 4 according to an embodiment of the present invention are described in greater detail.

Fig. 5 is a view illustrating a processing configuration of a layout editing unit of a dynamic conversion system according to an embodiment of the present invention. Referring to Fig. 5, the layout editing unit may arrange information (e.g., position, size, transparence, color, rotation, etc.) on the elements constituting a website or mobile web, such as a web application or multimedia data in a drag-and-drop manner using, e.g., a mouse.

Further, the arranged information is converted into parameters that are then stored in the database, and as described above, may be dynamically displayed in real-time in response to the user's call. In this case, the user browser may be identified, converted into HTML5 format or flash format, and displayed according to an embodiment of the present invention.

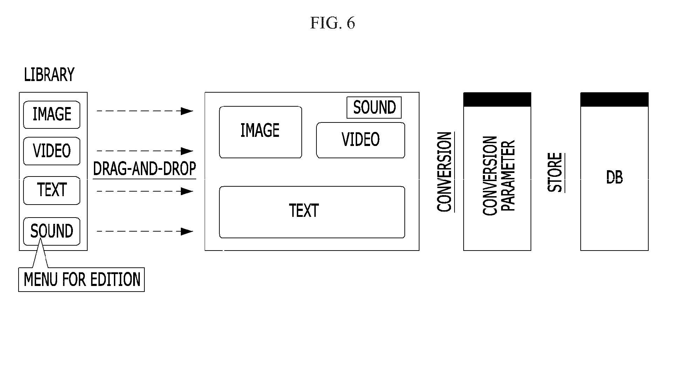

Fig. 6 is a view illustrating a processing configuration of a contents editing unit of a dynamic conversion system control command. Typically, in order to generate high-quality multimedia content on web, expertise in design, HTML, or Javascript is required. Accordingly, amateur users need hire an expert even in making simple changes to design or content of the generated webpage. However, as shown in Fig. 6, multimedia content such as images, videos, sounds, or text may be arranged through drag-and-drop, re-edited through the contents editing unit, and stored in the database as described above according to an embodiment of the present invention. For example, the contents editing unit may vary the size or color of each arranged multimedia content or may provide the function such as rotation or transparence.

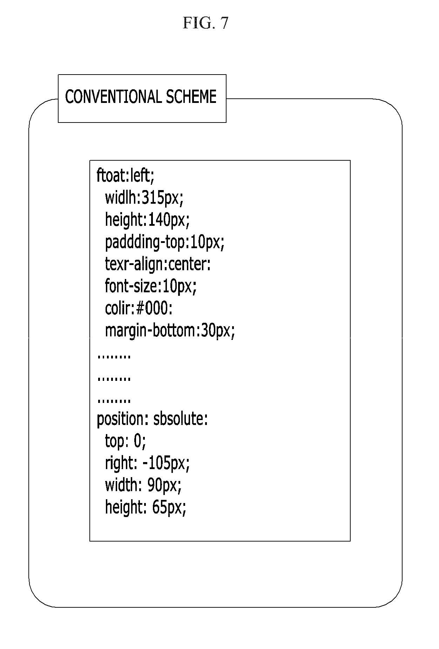

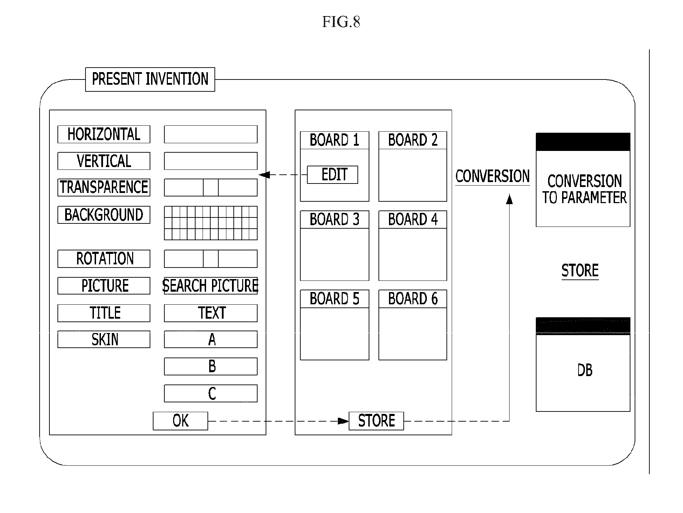

Next, the functions of the attribute editing unit are described with reference to Figs. 7 and 8.

Fig. 7 is a view illustrating an existing method for editing an attribute. As shown in Fig. 7, when building up a website using a board tool such as Zeroboard^{™} or Gnuboard^{™}, one without expertise on HTML or Javascript has difficulty in attribute editing. Accordingly, despite free use of such board tool, he/she needs to hire an expert at his/her expense.

However, according to an embodiment of the present invention, the attribute of each content may be edited through the attribute editing unit. In other words, if a web application of a webpage is arranged through drag-and-drop as described above, the attribute editing unit is executed to allow the attribute (e.g., arrangement, size, color, font, rotation, transparence, etc.) of each application to be easily edited. As such, the user may easily produce his desired webpage by re-defining the attribute of each application.

Fig. 8 is a view illustrating a processing configuration of an attribute editing unit of a dynamic conversion system according to an embodiment of the present invention. Referring to Fig. 8, in case the attribute of a particular board (e.g., board 1) of a webpage under production is to be edited, if the editing mode is executed, an attribute editing window is provided by the attribute editing unit, and the user may easily edit the attribute by selecting or inputting a corresponding attribute on the attribute editing window. As such, if the attribute editing is done and storing is executed, the webpage information after the attribute is edited is converted into parameter information and the parameter information is stored in the database.

Meanwhile, although not shown in the figures, the above-described display engine unit performs the function of converting the standard parameters generated through the layout editing unit, the contents editing unit, the attribute editing unit, and the conversion engine unit and stored in the database into an executable source that fits for each browser or OS and displaying it on the user browser and in an execution environment.

For example, a flash display engine would conduct real-time generation of the source from the standard parameters stored in the database to be executable on a flash player, execute the source, and display a result on the user browser.

Further, an HTML5 display engine would conduct real-time generation of the source (i.e., 'HTML5+Javascript') from the standard parameters stored in the database to be executable on each browser, execute the source, and display a result on the user browser.

Meanwhile, in case the display engine unit is inserted into a conventional board, blog, mini homepage, or email, the content generated according to the present invention may be used without limitation, and the existing HTML editor may be replaced therewith, thus maximizing user convenience.

The functional units of the system according to an embodiment of the present invention have been described in detail above. Next, a dynamic conversion process of a webpage according to an embodiment of the present invention is described with reference to Figs. 9 and 10.

### Webpage dynamic conversion process

Fig. 9 is a flowchart illustrating a webpage conversion process according to an embodiment of the present invention. Referring to Fig. 9, the layout editing unit is first executed (S901), and web constituent elements to constitute a webpage are dragged (S902) from the library and arranged on the webpage. Then, the arranged constituent elements are selectively sorted, their attributes are designated (S903), and content is edited.

Next, the arranged webpage constituent elements are converted into parameters by execution of parameter conversion according to an embodiment of the present invention, and the parameters are stored in the database (S904).

Meanwhile, in case there is a call from the user (S905), it is determined whether the user browser is a browser supporting HTML5 format (S906). In case it is determined that the user browser is an HTML5-supportive browser, the parameters stored in the database are converted into an HTML5 document (S907), and the HTML5 document is browsed and displayed on the user's terminal (S908).

In contrast, in case it is determined that the user browser is a browser not supportive of HTML5, the parameters stored in the database are converted into a flash file (S909), and the converted flash file is displayed on the user terminal (S910).

Fig. 10 is a flowchart illustrating a process of conversion to a mobile webpage according to an embodiment of the present invention. Referring to Fig. 10, the layout editing unit is first executed (S1001), and web constituent elements to constitute a webpage are dragged from the library (S1002) and are arranged on the webpage. Then, the arranged constituent elements are selectively sorted, their attributes are designated (S1003), and content is edited.

Meanwhile, in case the webpage to be generated is a webpage for mobile terminals (S1004), a mobile webpage editing function is executed to re-edit the webpage to a mobile page (S1005).

Next, the arranged webpage constituent elements are converted into parameters by execution of conversion to parameters according to an embodiment of the present invention and stored in the database (S 1006).

Meanwhile, in case there is a call from the user (S1007), it is determined whether the user browser is a browser supporting HTML5 format (S1008). In case the user browser is determined to support HTML5, the parameters stored in the database are converted into an HTML5 document (S1009), browsed, and displayed on the user terminal (S1010).

### [Embodiments of the present invention]

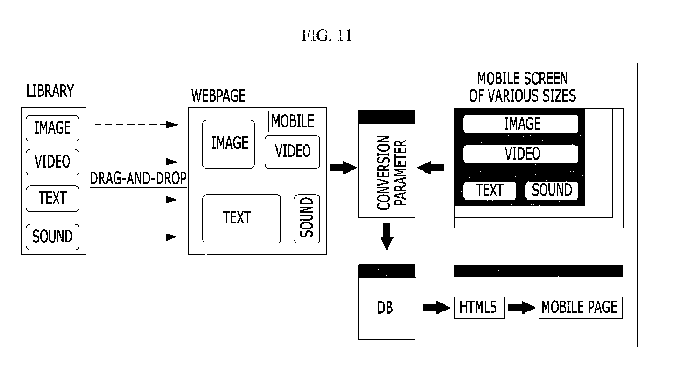

The system and method according to an embodiment of the present invention has been described above. Next, various implementation examples according to an embodiment of the present invention are described with reference to Figs. 11 to 17.

### Embodiment

Fig. 11 is a view illustrating the concept of converting a flash or HTML-format webpage into a mobile page according to an embodiment of the present invention. Referring to Fig. 11, a webpage is configured so that the webpage or content dynamically generated by the user are optimized for the mobile terminal using drag-and-drop as described above. In this case, the information (for example, size, transparence, color, position, etc.) on each constituent element (for example, images, videos, text, sounds) according to an embodiment of the present invention is converted into parameters and the parameters are stored in the database.

Meanwhile, as shown, in case a model name is chosen on a particular mobile terminal, the mobile page editing screen is displayed to fit the screen size of the mobile terminal, allowing the user to easily produce a webpage suited for the mobile terminal.

As such, the parameter information stored in the database is converted into, e.g., HTML5 format by the user's request and is then browsed on the user's mobile terminal.

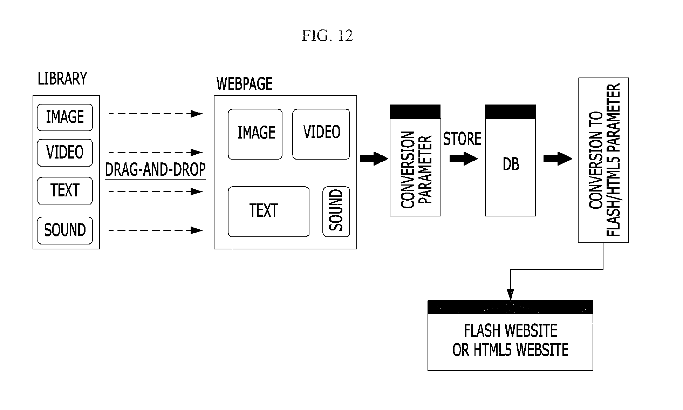

Fig. 12 is a view illustrating the concept of converting a flash or HTML-format webpage into a HTML5 or flash-format page according to an embodiment of the present invention. Referring to Fig. 12, a webpage is configured so that the website or content dynamically generated by the user are optimized for HTML5 or flash using drag-and-drop as described above, and then, the configured information (for example, size, transparence, color, position, etc.) is converted into parameters and the parameters are stored in the database.

In this case, the parameter information stored in the database is converted into flash or HTML5 format in response to the user's request, and is then browsed on the user terminal as flash website or HTML5 website. Accordingly, even when the user generates a webpage of a particular format, it may be browsed regardless of the browser or OS supported by the user terminal.

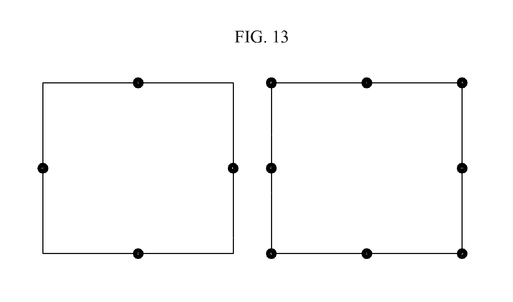

Hereinafter, additional functions according to an embodiment of the present invention are described in connection with Figs. 13 to 17.

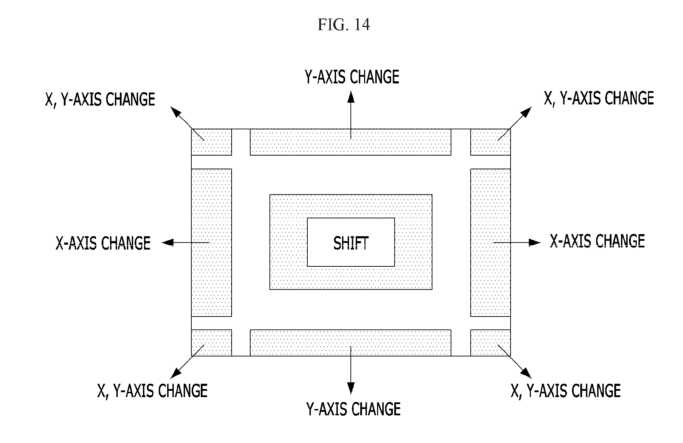

Fig. 13 is a view illustrating shifting region designations by a typical resizing processor, and Fig. 14 is a view illustrating a method of designating a region according to an embodiment of the present invention. Referring to Figs. 13 and 14, four or eight handlers have been conventionally used for resizing, but in the mobile environment (for example, smartphone or tablet PC), caused inconvenience due to a reduction in size thereof.

Accordingly, according to the present invention, all the regions may be automatically designated as shown in Fig. 14, thus providing for easy resizing. In other words, predetermined upper, lower, left, and right regions of the object may be designated as handlers, so that the user may easily conduct resizing.

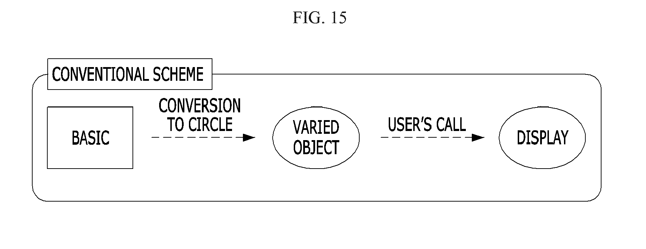

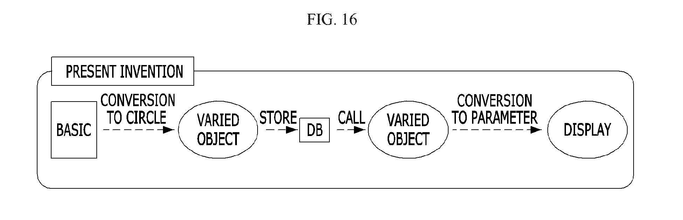

Fig. 15 is a view illustrating the concept of typical image conversion, and Fig. 16 is a view illustrating the concept of image conversion according to an embodiment of the present invention. Referring to Figs. 15 and 16, when converting an original rectangular image into an elliptical image using an image editor such as Photoshop according to the conventional art, a separate converted image is generated, and an image is recorded in the storage space as much as the conversion effects apply. This brings about the waste of the storage space.

However, as shown in Fig. 16, according to the present invention, the original version is converted into standard parameters. When there is the user's request, the parameters are converted into flash or HTML5 format and are displayed. Accordingly, multiple conversion effects may be brought up with a single original version while the storage space may be saved.

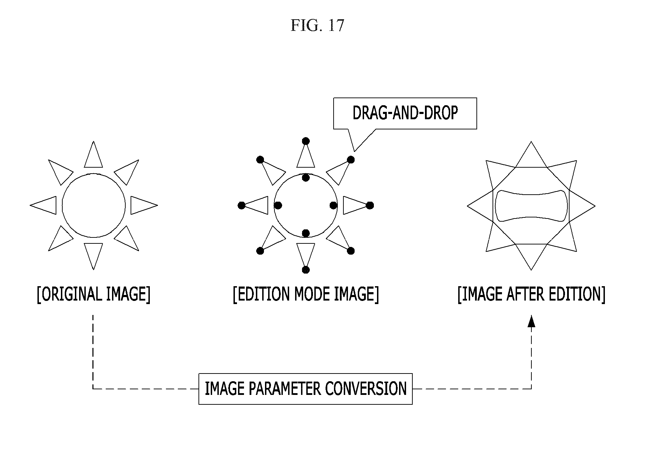

Fig. 17 is a view illustrating an image parameter conversion method according to an embodiment of the present invention. Referring to Fig. 17, it is significantly difficult to edit the original images in the functions such as size, extension, rotation, or image quality changing, which are supported by a general image editing program. For example, one with no expertise upon using programs such as Photoshop or Illustrator has difficulty in varying the image shape. However, as shown in Fig. 17, an image parameter conversion function according to the present invention applies to allow for easy changes to the image shape.

The various operations and functions described herein may be performed in any of a number of different types of functional units such as a specific processing functional unit and/or a processing functional unit implemented therein, and/or other constituent elements therein. For example, such functional units may generate such information as described herein and perform the operations and processes described herein, as well as perform various operations and processes as described herein or any other operations, functions, or equivalents thereof.

In some embodiments, such functional units (which may be implemented on the same device or separate devices from each other) may perform the processes and operations according to various aspects of the present invention and/or any other operations, functions, and equivalents thereof, as described herein. In some embodiments, the processes are performed by both the first functional unit in the first device and the second functional unit in the second device. In other embodiments, the processing and operations are fully performed by the processing units in one particular device. In still other embodiments, such processing and operations are performed using at least a first functional unit and a second functional unit in a single device.

Further, as described above, the terms "system," "device," and "unit" may be a single processing device or multiple processing devices. Such processing device(s) may be a microprocessor, a micro-controller, a digital signal processor, a micro-computer, a central processing unit, a field programmable gate array, a programmable logic device, a state machine, a logic circuit, an analog circuit, a digital circuit, and/or a predetermined device that manipulates signals (analog and/or digital signals) based on hard-coding the circuit and/or operation instructions. The processing module, module, processing circuit, and/or processing unit may have a single memory device, a plurality of memory devices, and/or a combined memory and/or integrated memory element that may be an embedded circuit of the processing module, module, processing circuit, and/or processing unit. Such memory device may be a read only memory (ROM), a random access memory (RAM), a volatile memory, a non-volatile memory, a static memory, a dynamic memory, a flash memory, a cache memory, and/or a predetermined device storing digital information. If the processing module, module, processing circuit, and/or processing unit includes one or more processing devices, the processing devices may be positioned in a concentrated manner (i.e., directly connected with each other via a wired and/or wireless bus structure) or in a distributed manner (for example, clouding computer via indirect connection through a local area communication network and/or a wide-area network). If the processing module, module, processing circuit, and/or processing unit implements one or more functions through a static machine, an analog circuit, a digital circuit, and/or a circuit, a storage memory and/or a memory constituent element, the operation instructions corresponding thereto may be embedded in or positioned outside a circuit including the static machine, analog circuit, digital circuit, and/or logic circuit. The memory element may be stored, and the processing module, module, processing circuit, and/or processing unit execute hard-coded and/or operation instructions corresponding to at least some of the steps and/or functions shown in one or more of the drawings. Such memory device or memory element may be included in a part of a product.

The present invention has been described above for the purpose of the steps indicating the particular functions and relations therebetween. The order or boundaries of the functional constituent elements and steps have been arbitrarily defined herein for ease of description. As long as the particular functions and relations are properly conducted, alternative boundaries and orders may be defined. Thus, such alternative boundaries and orders belong to the scope and spirit of the present invention claimed in the claims. Additionally, the boundaries of such functional constituent elements have been arbitrarily defined for ease of description. As long as any critical functions are properly conducted, alternative boundaries may be defined. Likewise, the blocks in the flowcharts may have been arbitrarily defined herein to represent any material functionality. For extended use, the flowchart block boundaries and order may have been defined, and still perform any critical functions. The alternative definition of functional constituent elements and flowchart blocks and orders both thus belong to the scope and spirit of the present invention. It may be appreciated by those of ordinary skill in the art that the functional constituent elements and other illustrated blocks, modules, and constituent elements may be implemented in separate constituent elements, semiconductor integrated circuits (ASIC), processors executing proper software, and similar or any combinations thereof, as shown.

The present invention may have been described at least partially using the terms in one or more embodiments. The embodiments of the present invention are used herein to represent the present invention and aspects, features, concepts, and/or examples thereof. Physical embodiments of the devices, products, machines, and/or processes implementing the present invention may include one or more aspects, features, concepts, and examples described above in connection with one or more embodiments. Further, the functions, steps, and modules that may be referred to by the same or different reference numerals throughout the drawings and that are named similarly or in the same manner may be integrated in the embodiments, and as such, the functions, steps, and modules may be the same or similar functions, steps, modules, or other ones.

Although not mentioned otherwise, signals from the elements shown in any of the drawings and/or between the elements may be analog or digital, continuous or discrete, electrical, optical, and single-ended or differential signals. For example, when a single path is shown as a single-ended path, it also represents a differential single path. Similarly, if a single path is shown as a differential path, it also represents a single-ended signal path. Whereas one or more particular architectures are shown herein, it may be understood by those of ordinary skill in the art that whether a direction connection between elements and/or an indirect coupling between other elements is made may be implemented using one or more data buses that are not clearly represented.

The term "processing unit" is used in the description of various embodiments of the present invention. The "module" includes a functional block that is implemented in hardware to perform one or more functions such as processing one or more input signals for generating one or more output signals. The hardware implementing the functional block may be directly operated in combination with software and/or firmware. As used herein, the module may include one or more sub-modules each serving as an independent module.

While certain combinations of various functions and features of the present invention have been clearly described, other combinations of the features and functions may also be made. The present invention is not limited to particular examples disclosed herein and clearly incorporate such other combinations.

Although the present invention has been described in connection with a limited number of embodiments and drawings together with specific constituent elements, they are merely provided for overall understanding of the present invention, and the present invention is not limited thereto. It may be understood by those of ordinary skill in the art that various changes and modifications may be made thereto.

Accordingly, the scope of the present invention should not be construed as limited to the above-described embodiments, and the following claims and all equivalents thereof should be appreciated to belong to the scope of the present invention.

## Claims

1. A dynamic conversion system of a webpage, comprising:
a library storage unit storing at least one constituent element constituting a webpage or a web application;
a layout editing unit arranging the constituent elements selected from the library storage unit on a layout to constitute a webpage;
an attribute editing unit configuring an attribute of each constituent element arranged by the layout editing unit;
a contents editing unit providing a function of editing content arranged by the layout editing unit;
a parameter converting unit converting each constituent element arranged by the layout editing unit into a standard parameter value;
a standard parameter information database storing the standard parameter value converted by the parameter converting unit;
a browser determination unit determining the type of a browser or an OS of a user terminal in response to a conversion request from a user;
a conversion engine unit converting standard parameter information stored in the standard parameter information database into a proper type of webpage source depending on a determination of the browser determination unit; and
a display engine unit displaying the converted source.

2. The dynamic conversion system of a webpage of claim 1, wherein the constituent element constituting the webpage or web application includes any one or more selected from an image, a video, text, and a sound.

3. The dynamic conversion system of a webpage of claim 1, wherein an attribute editable by the attribute editing unit includes any one or more selected from horizontal, vertical, transparence, background, rotation, picture, title, and skin.

4. The dynamic conversion system of a webpage of claim 1, wherein the conversion engine unit conducts conversion from the standard parameter information to a webpage of an HTML5 standard format or flash format.

5. The dynamic conversion system of a webpage of claim 1, further comprising a mobile editing unit re-editing the webpage produced by the layout editing unit to fit for an attribute of a mobile webpage.

6. A dynamic conversion method of a webpage performed on a webpage dynamic conversion system, the method comprising the steps of:
storing at least one constituent elements constituting a webpage or a web application by a library storage unit;
arranging the constituent element selected from the library storage unit on a layout to constitute a webpage by a layout editing unit;
configuring an attribute of each constituent element arranged by the layout editing unit by an attribute editing unit;
providing a function of editing content arranged by the layout editing unit by a contents editing unit;
converting each constituent element arranged by the layout editing unit into a standard parameter value by a parameter converting unit;
storing the standard parameter value converted by the parameter converting unit by a standard parameter information database;
determining the type of a browser or an OS of a user terminal in response to a conversion request from a user by a browser determination unit;
converting standard parameter information stored in the standard parameter information database into a proper type of webpage source depending on a determination of the browser determination unit by a conversion engine unit; and
displaying the converted source by a display engine unit.

7. The dynamic conversion method of a webpage of claim 6, wherein the constituent elements constituting the webpage or web application include any one or more selected from an image, a video, text, and a sound.

8. The dynamic conversion method of a webpage of claim 6, wherein an attribute editable by the attribute editing unit includes any one or more selected from horizontal, vertical, transparence, background, rotation, picture, title, and skin.

9. The dynamic conversion method of a webpage of claim 6, wherein the step of converting into the parameter source includes conducting conversion from the standard parameter information to a webpage of an HTML5 standard format or flash format.

10. The dynamic conversion method of a webpage of claim 6, further comprising re-editing the webpage produced by the layout editing unit to fit for an attribute of a mobile webpage by a mobile editing unit.
